# EUROPÄISCHE PATENTSCHRIFT

(11) **EP 0 988 182 B1**
(45) Veröffentlichungstag und Bekanntmachung des Hinweises auf die Patenterteilung: **05.09.2001**
(21) Anmeldenummer: 98934854.5
(22) Anmeldetag: 29.05.1998
(51) Int. Cl.: B60R 21/18

(54) **AIRBAG-RÜCKHALTESYSTEM**
AIR BAG RETENTION SYSTEM
SYSTEME DE RETENUE A AIRBAG

(30) Priorität: 12.06.1997 DE 19725558
(43) Veröffentlichungstag der Anmeldung: 29.03.2000
(73) Patentinhaber: Petri AG, 63743 Aschaffenburg (DE)
(72) Erfinder: ADOMEIT, Heinz-Dieter, D-10623 Berlin (DE); BRAUN, Eleonore, D-13505 Berlin (DE); HAHN, Daniel, D-10439 Berlin (DE)
(74) Vertreter: Bärmann, Klaus, Dipl.-Ing.
(86) Internationale Anmeldenummer: DE9801512
(87) Internationale Veröffentlichungsnummer: WO9856619

(56) Entgegenhaltungen:
- DE-A- 4 211 209
- DE-A- 4 232 041
- US-A- 3 146 460
- US-A- 3 430 979
- US-A- 3 706 463
- US-A- 3 830 519
- US-A- 3 970 329
- US-A- 5 062 662

## Beschreibung

Die Erfindung betrifft ein Airbag-Rückhaltesystem nach dem Oberbegriff des Anspruchs 1.

Airbag-Rückhaltesysteme im Bereich des Beckens des Insassen sind bekannt. Bei diesen bekannten Systemen sind Airbags auf einem Beckengurt aufgesetzt oder der Sicherheitsgurt ist als Airbag ausgebildet.

So ist aus der DE 43 06 528 A1 ein Airbag für Sicherheitsgurte bekannt, bei dem eine Airbagtasche auf den vorhandenen Gurt aufgebracht und mit einer Druckluftleitung sowie mit einem Druckluftgeber und -auslöser verbunden wird. Der Vorteil dieses Gurtairbags besteht darin, daß er im Gegensatz zu Airbags, die am Lenkrad oder vor dem Insassen befindlichen Teilen der Fahrzeugkarosserie untergebracht sind, unmittelbar am Insassen angebracht ist, d.h. er befindet sich bereits in dem Bereich, in dem er seine Schutzwirkung ausüben soll. Bei dieser Anordnung wird zwar der Oberkörper und der Kopf zusätzlich durch den Airbag geschützt. Jedoch wird der Bereich des Beckens nach wie vor nur durch den Beckengurt gehalten, der infolge seines straffen Sitzes am Körper und wegen seiner geringen Auflagefläche am Körper im Crashfall zu Verletzungen führen kann.

Weiterhin ist aus der DE 42 32 041 A1 eine aufblasbare Sicherheitsgurteinheit bekannt, bei der mindestens ein Teil eines Abschnitts, der mit einem Insassen in einem Fahrzeug in Kontakt steht, in einer sackartigen Form ausgebildet ist. Dabei behält der sackartige Abschnitt im inaktivierten Zustand eine bandartige Form bei und im Crashfall wird er durch Gas aufgeblasen und entfaltet. Bei dieser Sicherheitsgurteinheit ist also der Sicherheitsgurt abschnittsweise selbst als Airbag ausgebildet. Die Auflagefläche des Sicherheitsgurtes wird durch das Aufblasen des sackartigen Abschnitts vergrößert, so daß die Belastung des Körpers durch den Gurt im Crashfall verringert wird. Ein zusätzlicher Schutz des Oberkörpers und Kopfes kann aber mit dieser Anordnung nicht erreicht werden.

Weiterhin ist aus der gattungsbildenden US-PS 3,146,460 ein Sicherheitsgurt bekannt, auf dem aus einem elastischen Material bestehende, aufblasbare Elemente angeordnet sind, die im inaktivierten Zustand auf dem Körper eines Insassen liegen und deren Enden am Sicherheitsgurt befestigt sind. Auch bei dieser Anordnung kann es wegen des straffen Sitzes des Gurtes am Körper und wegen der geringen Auflagefläche am Körper im Crashfall zu Verletzungen kommen.

Der Erfindung liegt die Aufgabe zugrunde, die Verletzungsgefahr für den Insassen im Crashfall weiter zu verringern.

Erfindungsgemäß wird das durch die Merkmale des Anspruchs 1 erreicht.

Bei einem Airbag-Rückhaltesystem, das im Bereich des Unterkörpers des Insassen angeordnet ist, ist erfindungsgemäß ein im inaktivierten Zustand lose auf dem Körper des Insassen liegender aufblasbarer Gassack vorgesehen, der zwei Enden aufweist, mittels derer er an einem Bauteil des Kraftfahrzeuges befestigbar ist, wobei mindestens ein Ende lösbar am Kraftfahrzeug befestigbar ist. Insbesondere ist ein im inaktiven Zustand lose auf den Oberschenkeln des Insassen liegender Gassack vorgesehen.

Im Gegensatz zu den bekannten Gurtairbags liegt also der erfindungsgemäß angeordnete Gassack im inaktivierten Zustand nicht fest am Körper an. Im Crashfall wird dieser Gassack auch im Beckenbereich sowohl zum Insassen hin als auch in Richtung der dem Insassen gegenüberliegenden Fahrzeugbaugruppe, z. B. in Richtung der Armaturentafel oder der Sitzlehne der Vordersitze aufgeblasen. Anschließend breitet sich der unten am Insassen anliegende Gassack entlang des Körpers des Insassen nach oben aus, wodurch der

Insasse auch aus einer "OOP"-Position ("out of position"-Lage) heraus in eine aufrechte Sitzstellung gebracht wird, so daß sich auch der Kopf des Insassen vor der vollen Entfaltung des Gassackes in einer aufrechten Stellung befindet. Dadurch wird die Gefahr einer Verletzung durch den sich von unten nach oben ausbreitenden Gassack verringert.

Die Rückhaltewirkung des erfindungsgemäßen Rückhaltesystems beruht auf einer kombinierten Zug- und Druckbelastung des Gassacks. So wird im Beckenbereich bereits in der ersten Entfaltungsphase der sich an den Körper des Insassen anlegende Gassack auf Zug beansprucht. Gleichzeitig erfolgt eine Druckbelastung durch Abstützung des Gassacks auf den Oberschenkeln. Bei weiterer Vorverlagerung des Insassen und bei fortschreitender Entfaltung des Gassacks stützt sich dieser zusätzlich an Teilen der Fahrzeugstruktur, wie Lenkrad, Instrumententafel, Frontscheibe oder Rückseite der Vordersitze ab.

Die Enden des Gassacks sind seitlich oder hinter dem Insassen über Halterungen am Kraftfahrzeug befestigbar.

Die Enden des Gassacks sind angepaßt an die Halterungen schmaler ausgeführt als der übrige Bereich des Gassacks. Es ist weiterhin zweckmäßig, daß der Gassack im inaktivierten Zustand innerhalb einer Hülle gefaltet ist, die im Crashfall durch den sich entfaltenden Gassack aufgerissen wird.

Es ist vorteilhaft, daß ein Ende des Gassacks über eine Zuleitung oder ein Diffusorrohr mit einem Gasgenerator verbunden ist, der an oder neben dem Fahrzeugsitz, an oder im Mitteltunnel, am Boden oder an der Seitenwand oder an einer anderen Stelle des Fahrzeugs angeordnet ist. Dann ist es möglich, den Gassack in gleicher Weise wie einen Gurt mit seinem anderen Ende bei Nichtgebrauch an der Fahrzeugwand aufzuhängen.

Die schmalen Enden des Gassacks können bei ausgebreiteter Lage des Gassacks mit Abstand nebeneinander liegen, zueinander geneigt oder hintereinander angeordnet sein. In beiden erstgenannten Fällen weisen die Gassäcke in ausgebreiteter Lage also eine Form auf, die einem Hufeisen ähnelt, wobei allerdings der mittlere Bereich wesentlich breiter ist, als es die Enden sind. Im Falle der hintereinander angeordneten Enden weisen diese und der Gassack entweder im wesentlichen eine gemeinsame Achse auf, oder die Achsen der Enden und des Gassackes stehen annähernd im rechten Winkel zueinander.

Der Gassack kann unterschiedliche Formen aufweisen, z.B. Fächer-, Kissen-, Kreis-, Linsen-, Trapez- oder Knochenform. Insbesondere für den Schutz des Fahrers ist es zweckmäßig einen fächer- oder knochenförmigen Gassack zu verwenden, damit durch den sich von unten entfaltenden Gassack nicht die Arme so zur Seite gedrückt werden, daß die Hände das Lenkrad nicht mehr erfassen können.

In einer weiteren Ausgestaltung weist der Gassack mindestens eine mit Durchbrüchen versehene Trennwand zur Bildung eines Mehrkammer-Airbags auf, wobei die Grundfläche der Tennwände der Form des aufgeblasenen Gassacks entspricht. Dadurch ist es möglich, bestimmte Abschnitte des Gassacks zeitlich verzögert zu entfalten. Der gleiche Zweck kann auch dadurch erzielt werden, daß der Gassack durch mindestens eine Naht in mehrere Kammern unterteilt ist, die untereinander in Verbindung stehen. Der Gassack weist dadurch im aufgeblasenen Zustand eine luftmatrazenartige Oberflächenstruktur auf.

Für die zusätzliche Straffung des Gassacks im aufgeblasenen Zustand kann mindestens ein Band oder eine Kordel entlang des äußeren Randes des ausgebreiteten Gassacks in diesem lose verlaufen, wobei ein Ende des Bandes innerhalb des Gassackes und dessen anderes Ende außerhalb des Gassackes befestigt ist.

In einer weiteren Ausgestaltung ist vorgesehen, daß mindestens ein sich in anderer Richtung als der Gassack entfaltender Zusatzgassack vorgesehen ist. So kann z.B. ein Zusatzgassack vorgesehen sein, der sich in den Fußraum oder in den Kopfraum hinein erstreckt.

Das lösbare Ende des Gassacks weist zweckmäßig eine in ein Schloß einklinkbare Verriegelungseinheit auf, in deren Bereich das Ende des Gassacks als flaches Band verläuft. Die Verriegelungseinheit kann entsprechend der eines Gurtes ausgebildet sein.

Das gasgeneratorseitige Ende des Gassacks ist zweckmäßig an einer Zuleitung oder an einem Diffusorrohr befestigt, an oder in dem ein Gasgenerator vorgesehen ist. In einer weiteren Ausgestaltung ist vorgesehen, daß der gasgeneratorseitige Bereich des Gassacks auf einem Zuleitungsendrohr sitzt und dort von einem ersten Halteteil umfaßt ist, daß das Ende des Gassacks über das Halteteil gestülpt ist und von mindestens einem zweiten Halteteil umfaßt ist, wobei die ersten und zweiten Halteteile neben der Zuleitung oder dem Diffusorrohr aneinander liegen und dort miteinander verbunden sind und mit dem Kfz verbindbar sind.

In einer weiteren Ausführungsform ist vorgesehen, daß der gasgeneratorseitige Bereich des Gassacks auf einem Zuleitungsendrohr sitzt und von einem Keilring umgeben ist, daß das Ende des Gassacks über den Keilring gestülpt ist und von einem mit einem Innenkonus versehenen Klemmteil umgeben ist.

Bei einer weiteren Ausführungsform ist der Gasgenerator in einem Diffusorrohr am Kfz befestigt und über eine gekrümmte, flexible oder starre Zuleitung mit einem schräg nach oben vorn verlaufenden Zuleitungsendrohr verbunden, an dem das gasgeneratorseitige Ende des Gassacks befestigt ist.

Die Erfindung soll in Ausführungsbeispielen anhand von Zeichnungen erläutert werden. Es zeigen:
- Fig. 1: eine Draufsicht auf einen Insassen mit einem erfindungsgemäßen Airbagsystem in schematischer Darstellung;
- Fig. 2: das System Insasse - Airbag nach Fig. 1 in einer Seitenansicht;
- Fig. 3: eine Draufsicht auf das System nach Fig. 1 im teilentfalteten Zustand;
- Fig. 4: eine Seitenansicht des Systems nach Fig. 3;
- Fig. 5: das System Insasse - Airbag nach Fig. 1 im voll entfalteten Zustand;
- Fig. 6: eine Seitenansicht des Systems nach Fig. 5;
- Fig. 7a - c: die Draufsicht auf Gassäcke mit nebeneinander liegenden Enden;
- Fig. 8: einen Gassack mit nebeneinander liegenden Enden mit Band oder Kordel zur Straffung des aufgeblasenen Gassacks;
- Fig. 9: einen Gassack mit nebeneinander liegenden Enden mit zwei Bändern oder Kordeln zur Straffung des aufgeblasenen Gassacks;
- Fig. 10: einen einteiligen Zuschnitt für einen Gassack nach Fig. 7;
- Fig. 11: einen einteilig gewebten Gassack nach Fig.7;
- Fig. 12: einen Mehrkammer-Gassack in der Draufsicht;
- Fig. 13: einen Schnitt durch den Gassack nach Fig. 12;
- Fig. 14: eine weitere Ausführungsform eines Mehrkammergassacks;
- Fig. 15: einen Gassack nach Fig. 7 mit Fangbändern;
- Fig. 16: einen Gassack mit zusätzlichem Kopfschutz;
- Fig. 17: einen Gassack mit zusätzlichem Seitenschutz;
- Fig. 18: einen Gassack mit zusätzlichem Schutz für den Fuß- oder Kopfraum;
- Fig. 19: den Gassack nach Fig 18 in einer Seitenansicht;
- Fig. 20a-h: unterschiedliche Gassackformen in der Draufsicht;
- Fig. 20i,j: Ausführungsformen der Enden des Gassacks;
- Fig. 21: eine Seitenansicht der Schloßseite des erfindungsgemäßen Airbag-Systems im inaktivierten Zustand des Gassack;
- Fig. 22: das System nach Fig. 21 mit entfaltetem Gassack;
- Fig. 23: das schloßseitige Ende des Gassacks in einer Seitenansicht;
- Fig. 24: das schloßseitige Ende nach Fig. 23 im Schnitt;
- Fig. 25: das schloßseitige, für den Einbau in eine Verriegelungseinheit zusammengelegte Ende nach Fig. 23;
- Fig. 26: das schloßseitige, mit der Verriegelungseinheit verbundene Ende des Gassacks;
- Fig. 27: eine Seitenansicht der Generatorseite des Airbag-Systems im inaktivierten Zustand des Gassacks;
- Fig. 28: das System nach Fig. 27 mit entfaltetem Gassack;
- Fig. 29: das generatorseitige Ende des Gassacks in einer Seitenansicht;
- Fig. 30: einen Schnitt B-B durch die Fig. 29;
- Fig. 31: einen Schnitt C-C durch die Fig. 29;
- Fig. 32: eine Seitenansicht des umgestülpten Endes nach Fig 29;
- Fig. 33: eine Ansicht des umgestülpten Endes nach Fig. 32;
- Fig. 34: einen Querschnitt durch die Halterung des generatorseitigen Endes des Gassacks;
- Fig. 35: eine Ansicht der Halterung nach Fig. 34;
- Fig. 36: einen Längsschnitt durch die Halterung nach Fig. 35;
- Fig. 37: eine weitere Ausführungsform der Halterung des generatorseitigen Endes des Gassacks;
- Fig. 38: einen Querschnitt durch die Halterung nach Fig. 37;
- Fig. 39: die Generatorseite des Airbag-Systems mit zwei gegenüberliegenden topfförmigen Generatoren;
- Fig. 40: die Generatorseite des Airbag-Systems mit zwei versetzt zueinander angeordneten topfförmigen Generatoren;
- Fig. 41: die Generatorseite des Airbag-Systems mit einem topfförmigen Generator;
- Fig. 42: eine Draufsicht auf das Airbag-System mit Insassen und unterschiedlichen Befestigungsorten der Generatorseite des Airbag-Systems im Kfz;
- Fig. 43: eine Seitenansicht, teilweise geschnitten, der Befestigung der Generartorseite im Kfz.

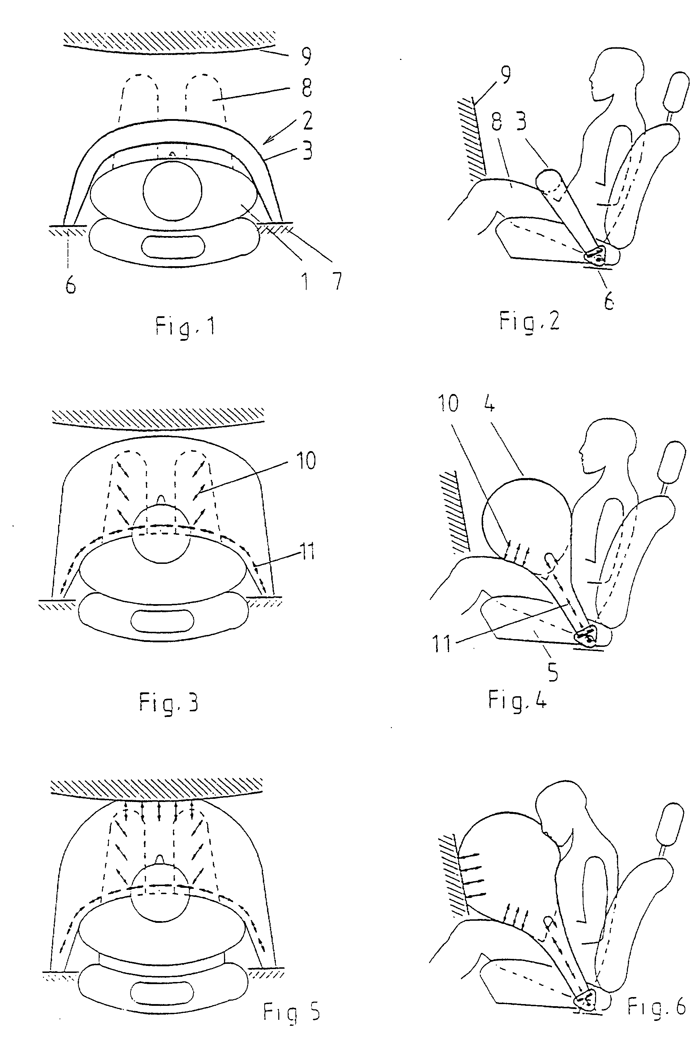

In den Figuren 1 bis 6 ist ein in einem Kraftfahrzeug sitzender Inssase 1 dargestellt. Diesem ist ein erfindungsgemäßes Airbagsystem 2, zugeordnet. Dieses schematisch dargestellte System weist einen gefalteten, in einer Hülle 3 befindlichen Gassack 4 auf, der beidseitig des Sitzes 5 an Befestigungstellen 6, 7 am Kraftfahrzeug befestigt ist. In dem in den Figuren 1 und 2 dargestellten gefalteten Zustand liegt der Gassack lose auf den Oberschenkeln 8 des Insassen. Der Insasse befindet sich in dieser Darstellung in einer Normalposition, d.h. er hat einen relativ großen Abstand zur vor ihm befindlichen Fahrzeugstruktur 9, wie Lenkrad, Armaturentafel oder Lehne des Vordersitzes.

In der ersten Stufe der Entfaltung, wie sie in den Figuren 3 und 4 dargestellt ist, breitet sich der Gassack im Beckenbereich des Insassen sowohl auf dessen Körper als auch auf die Fahrzeugstruktur hin aus. Bereits in diesem teilentfalteten Zustand wird eine verzögernde Wirkung auf den Insassen ausgeübt. Das geschieht durch die Zugbelastung des am Körper des Insassen anliegenden Bereichs des Gassacks sowie durch die Abstützung des Gassacks auf den Oberschenkeln. Der Gassack weist also einen Druckbereich 10 und einen Zugbereich 11 auf.

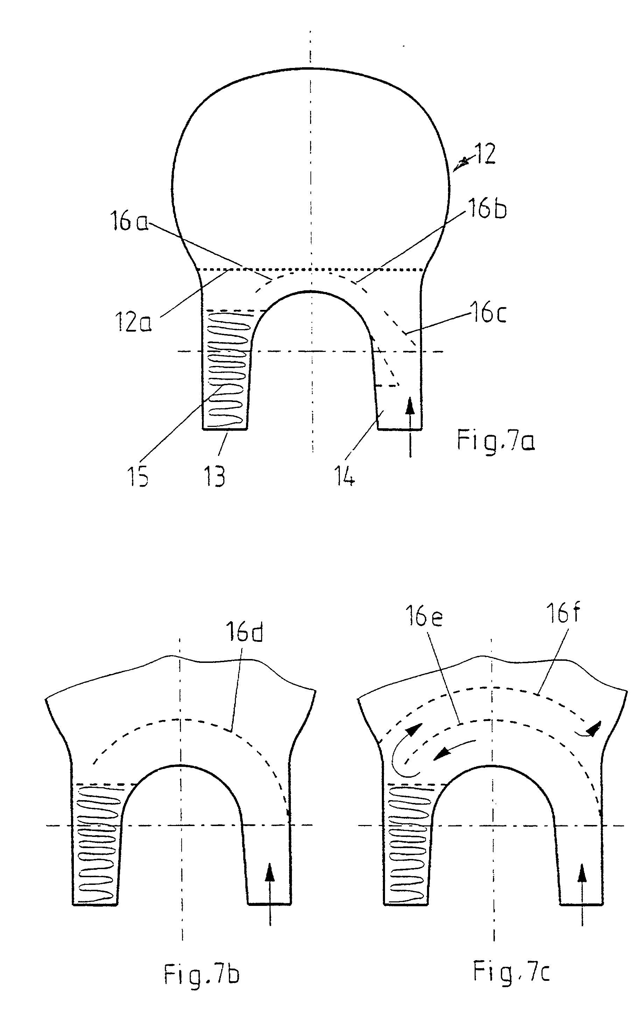

In dieser ersten Stufe der Entfaltung wirkt der Gassack aber nicht nur im Beckenbereich auf den Insassen sondern unmittelbar nach Erreichen des Insassen rollt er sich quasi am Oberkörper des Insassen nach oben, wodurch das Abknicken des Oberkörpers, wie es bei einem bekannten Gurtairbag eintritt, verhindert wird. Bei voller Entfaltung des Gassacks stützt sich dieser zusätzlich an der Fahrzeugstruktur 9 ab, wie es in den Figuren 5 und 6 dargestellt ist.

Die Rückhaltewirkung des erfindungsgemäßen Airbagsystems wird also dadurch erreicht, daß der Gassack infolge des Aufblasens sowohl Druck- als auch Zugbelastungen aufnimmt. Bei einem herkömmlichen Beckengurtairbag, der auch im inaktivierten Zustand des Gassacks am Körper des Insassen anliegt, werden dagegen nur Druckbelastungen aufgenommen.

In der Fig. 7a ist eine Ausführungsform eines Gassacks für das erfindungsgemäße Airbagsystem dargestellt. Der Gassack 12 weist zwei im Abstand nebeneinander liegende Enden 13, 14 auf. Ein Ende 13 ist dabei durch eine Naht 15 flach abgenäht. Wie später detailliert dargestellt wird, ist dieses Ende mit einem Schloß verbindbar, so daß der Gassack an dieser Seite ähnlich wie ein Gurt vom Fahrzeug lösbar ist. Das andere Ende 14 ist schlauchförmig und wie später detailliert dargestellt ist, mit einem Gasgenerator verbunden.

Zur gerichteten Einleitung des Gases sind im Gassack 12 in einer Reihe hintereinander liegende Abnäher 16a bis 16c vorgesehen, zwischen denen Lücken für den Eintritt des Gases in den Gassack vorhanden sind. Im vorliegenden Ausführungsbeispiel sind im Bereich, der sich von den Enden 13, 14 bis zu der Linie 12a erstreckt, nicht dargestellte Einlagen zur Verstärkung des auf Zug beanspruchten Abschnittes des Gassacks vorgesehen.

In der Fig. 7b ist eine Ausführungsform mit einem durchgehenden Abnäher 16d dargestellt, der vom rechten Rand des Gassacks ausgehend bogenförmig nach links verläuft und dort im Abstand zum linken Rand des Gassacks endet. Bei dieser Ausführungsform tritt das Gas auf der rechten Seite in den unteren Abschnitt des Gassacks ein, wird auf die linke Seite geleitet und tritt dort in den übrigen Bereich des Gassacks ein.

Die Fig. 7c zeigt eine Ausführungsform, bei der zwei nebeneinander liegende Abnäher 16e und 16f vorgesehen sind, wobei der Abnäher 16e wie der Abnäher 16d in der Fig. 7b verläuft, während der Abnäher 16f vom linken Rand des Gassacks ausgehend nach rechts verläuft und dort im Abstand zum rechten Rand des Gassacks endet. Das Gas wird deshalb zick-zackförmig vom unteren Bereich des Gassacks in dessen übrigen Bereich geleitet.

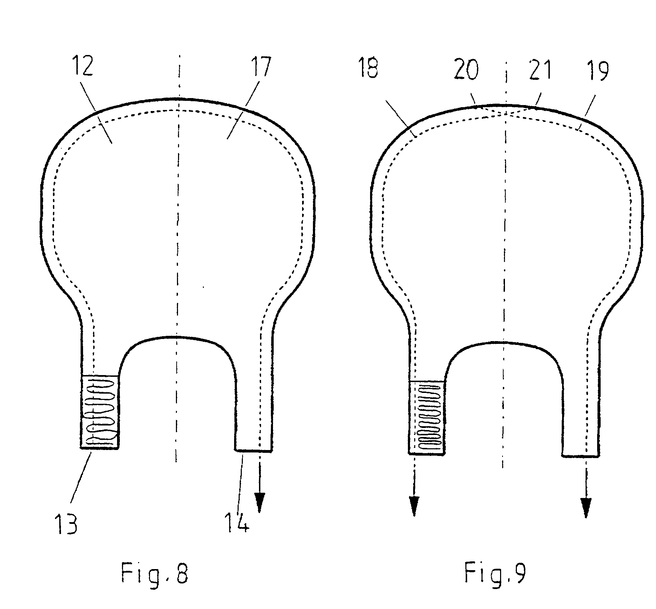

Beim Ausführungsbeispiel der Fig 8 ist am äußeren Rand des ausgebreiteten Gassacks eine Kordel oder ein Band 17 eingenäht, mit dem ein Zug ausgeübt werden kann. Dadurch kann eine zusätzliche Straffung des aufgeblasenen Gassacks erzielt und die Entfaltungsrichtung des Gassacks beeinflußt werden. Das Band ist am flachen Ende 13 im Gassack befestigt, am anderen Ende 14 aus dem Gassack herausgeführt und an einem Bauteil des Kraftfahrzeugs befestigt.

In der Ausführungsform der Fig. 9 sind zwei gekreuzte Kordeln oder Bänder 18, 19 vorgesehen, die an den Kreuzungsstellen nicht miteinander verbunden sind. Vielmehr sind Enden 20, 21 mit dem Gassack 12 verbunden. Das andere Ende der Bänder 18, 19 wird aus dem Gassack herausgeführt. Bei dieser Ausführungsform kann ähnlich wie bei einer Jogginghose beidseitig ein Zug ausgeübt werden. Die erzielten Wirkungen sind ähnlich wie in der vorher beschriebenen Ausführungsform.

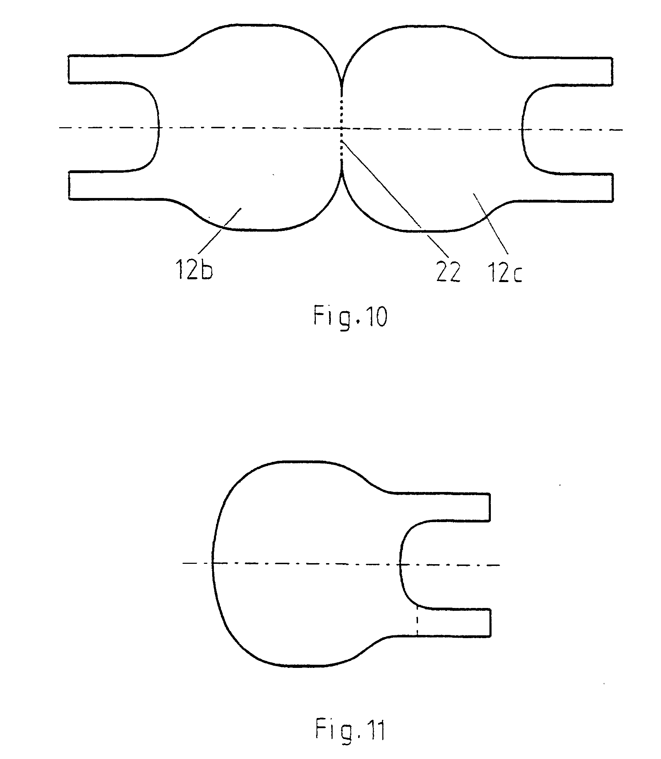

Die Figuren 10 und 11 zeigen Beispiele für die Herstellung des Gassackes. In der Ausführungsform der Fig. 10 ist ein dort dargestellter einteiliger Zuschnitt des Gassacks vorgesehen. Die beiden Teile 12b und 12c des Gassackes werden um die gemeinsame Kante 22 aufeinandergelegt und miteinander vernäht.

Im Ausführungsbeispiel der Fig. 11 wird der Gassack in der dort dargestellten Form als ein Stück gewebt. Das Ende auf der Schloßseite wird dabei zusammengewebt bzw. kann anschließend flach abgenäht werden. Das Ende auf der Seite des Generators wird an diesen angeschlossen.

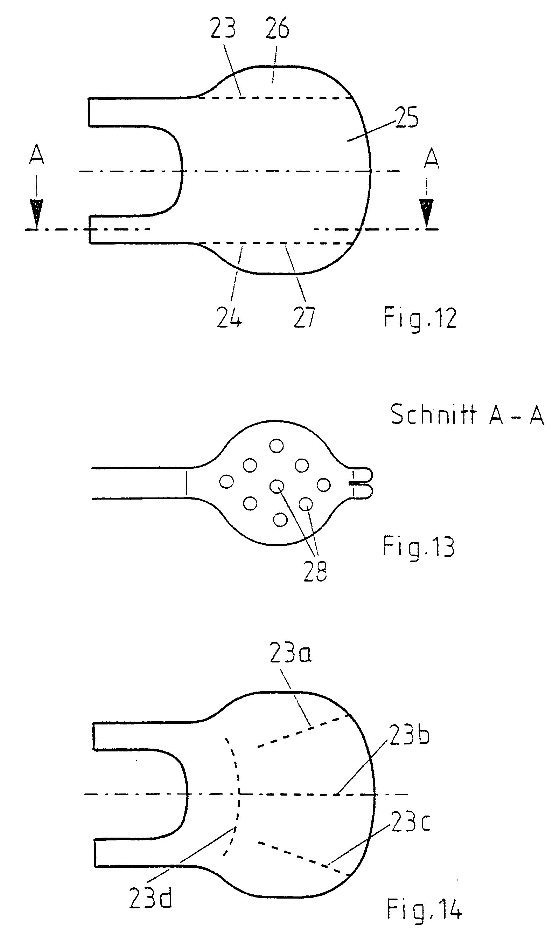

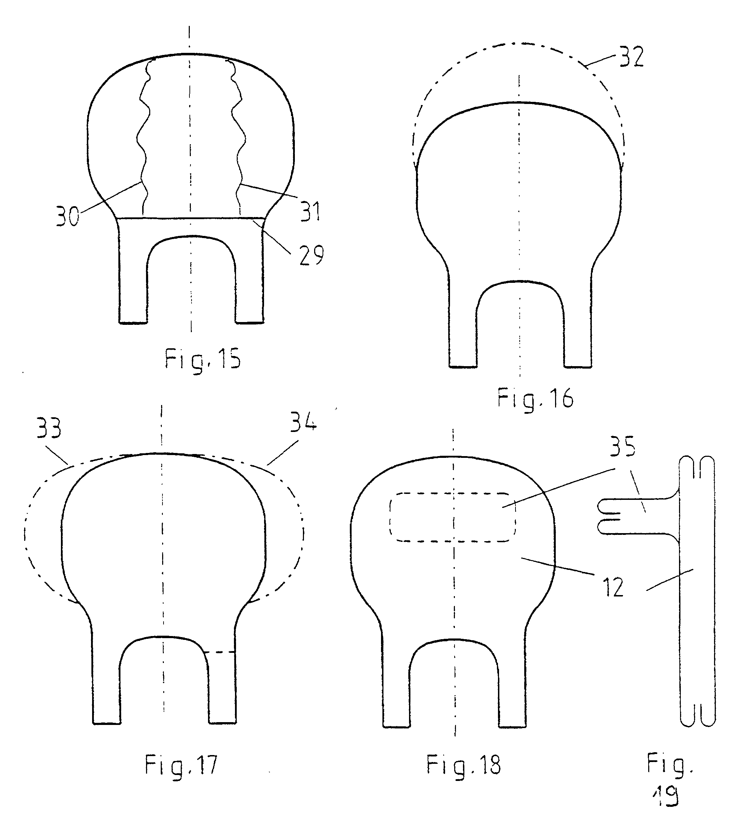

In den Figuren 12 und 13 ist ein Mehrkammergassack dargestellt. Dieser weist Trennwände 23 , 24 auf, die etwa parallel zu den Enden des Gassacks verlaufen. Dadurch wird der Gassack in eine Hauptkammer 25 und zwei Nebenkammern 26 und 27 unterteilt. Die Trennwände weisen Durchbrüche 28 auf, durch die das Gas aus der Hauptkammer in die Nebenkammern eintreten kann. Die Trennwände sind so flexibel, daß durch sie das Falten des Gassacks nicht erschwert wird. Bei dieser Ausführungsform wird der Gassack im Bereich der Nebenkammern verzögert aufgeblasen.

In der Fig. 14 ist ein Mehrkammergassack dargestellt, bei dem dieser durch mehrere Nähte 23a - d in mehrere Kammern unterteilt ist, die untereinander in Verbindung stehen. Der Gassack weist dadurch im aufgeblasenen Zustand eine luftmatrazenartige Oberflächenstruktur auf.

Beim Ausführungsbeispiel der Fig. 15 sind zwischen einem quer zu den Enden 13, 14 verlaufenden Band 29 und den gegenüberliegenden Enden des Gassacks Fangbänder 30, 31 vorgesehen, die in gleicher Weise wie bei bekannten Gassäkken wirken.

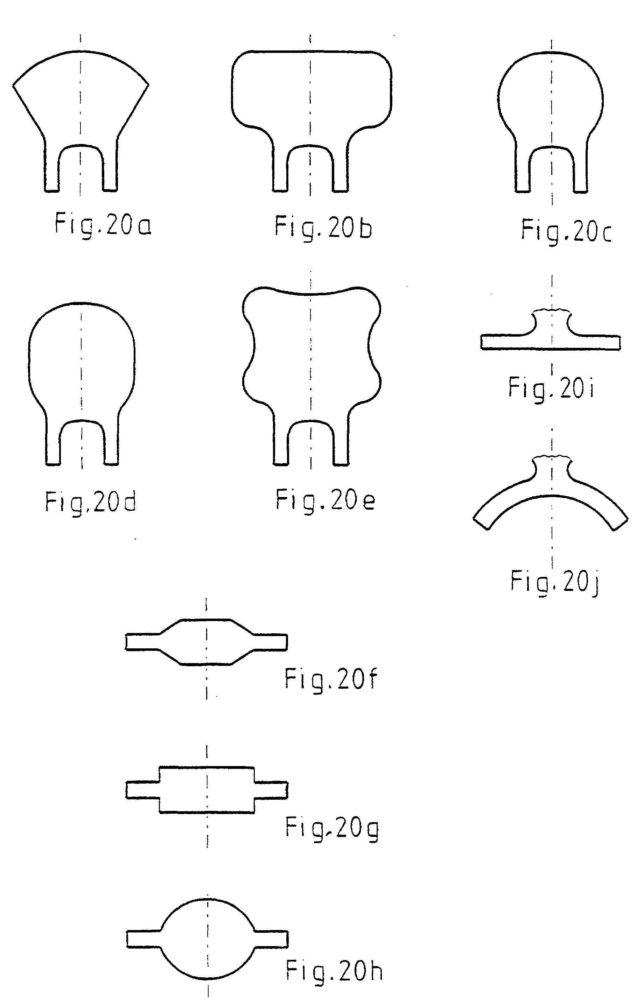

In den Figuren 16 bis 19 sind Abwandlungen der Grundform des Gassackes dargestellt, wobei die gestrichelt dargestellten Formen sowohl zusätzliche Kammern eines Mehrkammer-Gassacks sein können als auch die erweiterten Konturen eines Einkammer-Gassacks. In der Ausführungsform der Fig. 16 ist der Gassack speziell für den Schutz des Kopfes entlang der Kontur 32 vergrößert. In der Ausführungsform der Fig. 17 ist der Gassack entweder nach links oder rechts entlang der Konturen 33 oder 34 verbreitert. In der Ausführungsform der Figuren 18 und 19 weist der Gassack einen Zusatzgassack 35 auf, der sich von einer Seite des Gassacks 12 senkrecht von diesem weg erstreckt. Je nach Lage dieser Seite im Kraftfahrzeug wirkt dieser Zusatzgassack 35 als Fuß- oder Kopfraumbag.

In den Figuren 20a bis h sind unterschiedliche Formen des Gassacks dargestellt. Als Ausführungsformen mit nebeneinanderliegenden Enden sind in der Fig. 20a ein fächerförmiger, in der Fig. 20b ein kissenförmiger, in der Fig. 20c ein kreisförmiger, in der Fig. 20d ein linsenförmiger und in der Fig. 20e ein knochenfömiger Gassack dargestellt.

Bei den Ausführungsbeispielen der Figuren 20 f - h sind die Enden des jeweiligen Gassacks im Unterschied zu den vorherghenden Ausführungsformen nicht neben- sondern hintereinander angeordnet, wobei die Enden und der Gassack im wesentlichen eine gemeinsame Achse aufweisen. Der Gassack mit seinen zugehörigen Enden weist somit die Grundform eines Schlauches auf, wobei der Gassack der Fig. 20f zu den Enden hin trapezförmig verläuft, die Fig. 20g einen kissenförmigen und die Fig. 20h einen linsenförmigen Gassack zeigt.

Die Fig. 20i zeigt ebenfalls eine Ausführungsform hintereinander liegender Enden, wobei hier deren Achse und die Achse des Gassackes zumindest annähernd einen rechten Winkel bilden. In der Ausführungsform der Fig. 20j sind zwei zueinander geneigte Enden vorgesehen. Die Ausführungsformen der Enden der Figuren 20i und j sind bei allen vorher beschriebenen Gassackformen anwendbar.

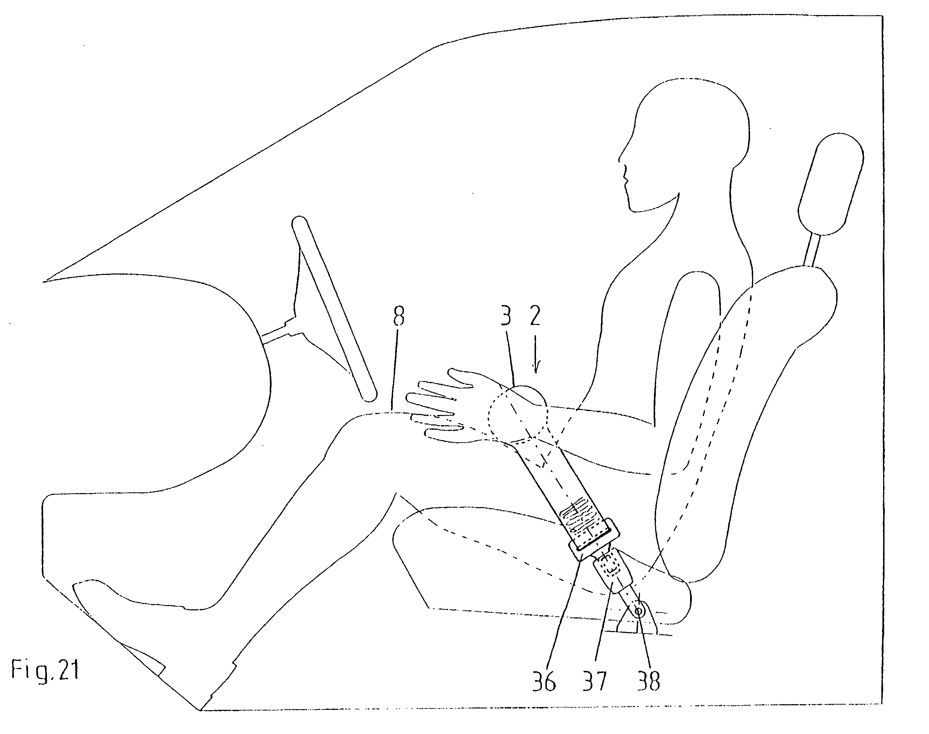

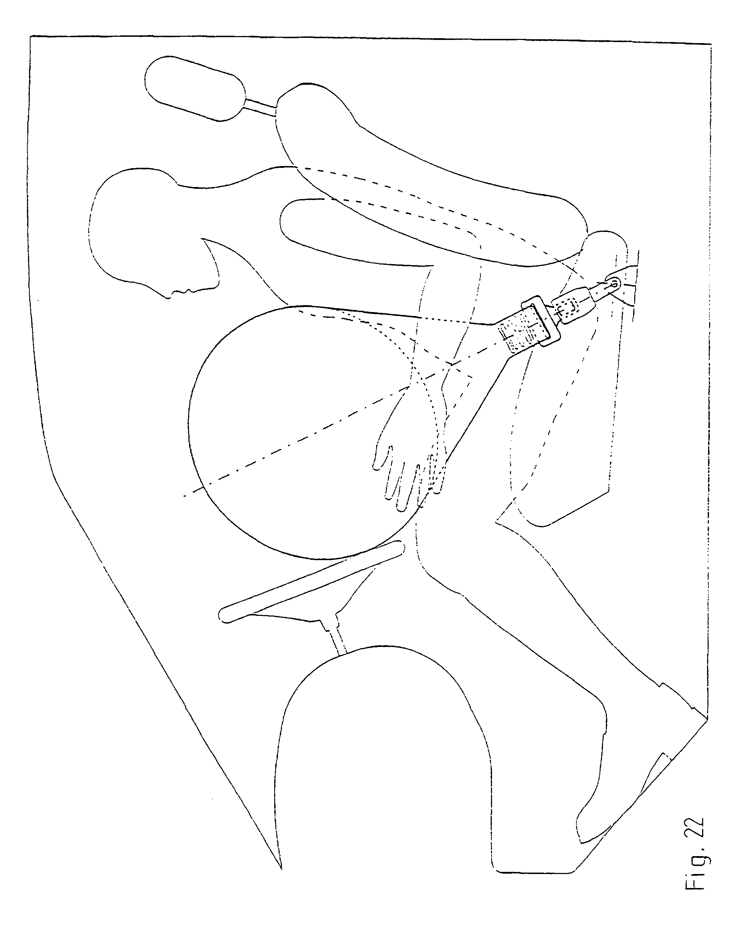

Die Fig. 21 zeigt detaillierter die Schloßseite des Airbagsystems 2, am Beispiel des Beifahrersitzes. Wie bereits in der Fig. 2 gezeigt wurde, liegt das Airbagsystem 2 mit dem in der Hülle 3 gefalteten Gassack lose auf den Oberschenkeln 8 des Insassen lose auf. Der Gassack ist mit einem Ende an einer Verriegelungseinheit 36 befestigt, die in ein Schloß 37 einführbar ist. Das Schloß ist an einem Befestigungspunkt 38 mit dem Kraftfahrzeug verbunden. Die Fig. 22 zeigt die Anordnung der Fig. 21 mit entfaltetem Gassack. Die Wirkung entspricht der im Zusammenhang mit der Fig. 6 erläuterten Wirkung.

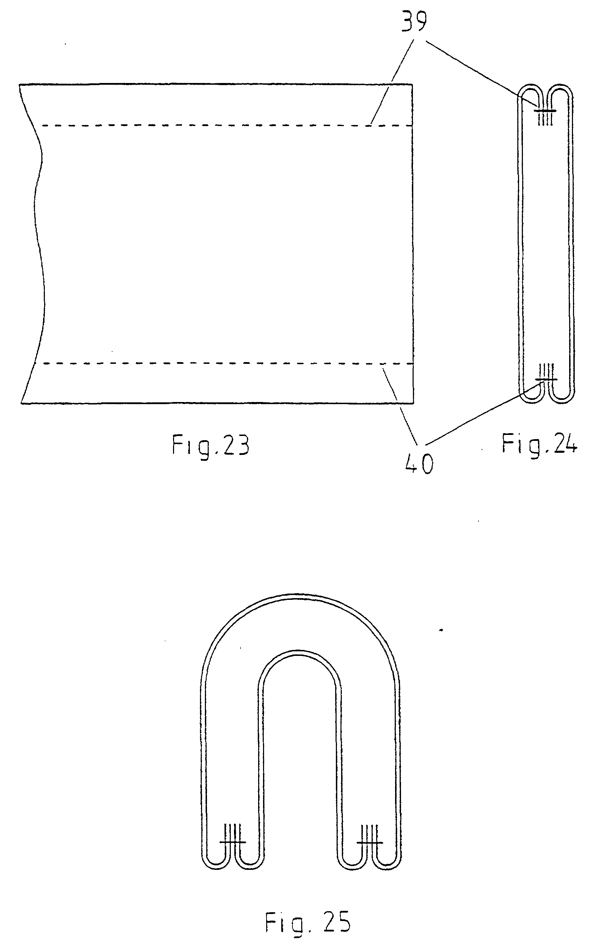

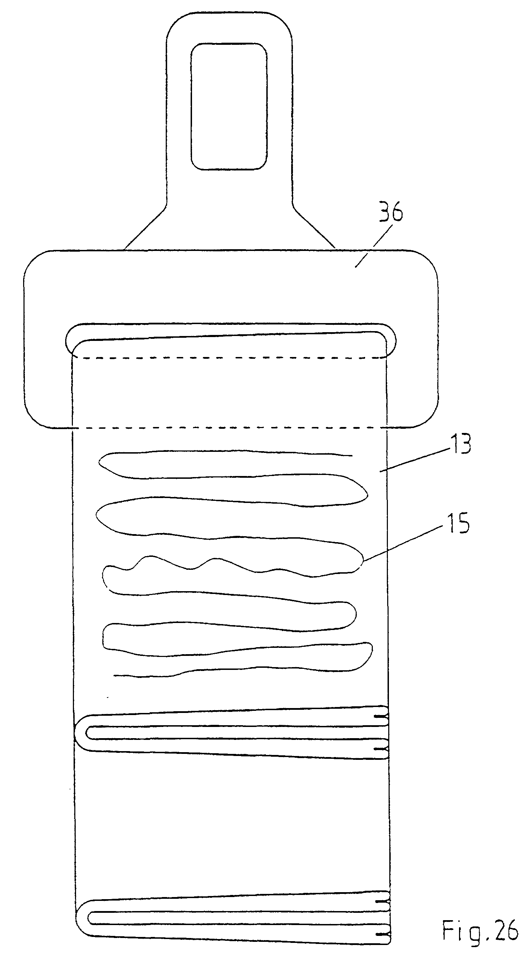

Die Figuren 23 und 24 zeigen das schloßseitige Ende 13 des Gassacks 12, bei dem die übereinandergelegten Seiten durch Nähte 39, 40 miteinander verbunden sind. Zur Verbindung mit der schmaleren Verriegelungseinheit 36 ist das Ende in der in Fig. 25 dargestellten Weise zusammengelegt und in dieser Lage mit der Verriegelungseinheit 36 verbunden (Fig. 26). Die zusammengelegten Abschnitte sind ihrerseits mittels der Naht 15 miteinander verbunden.

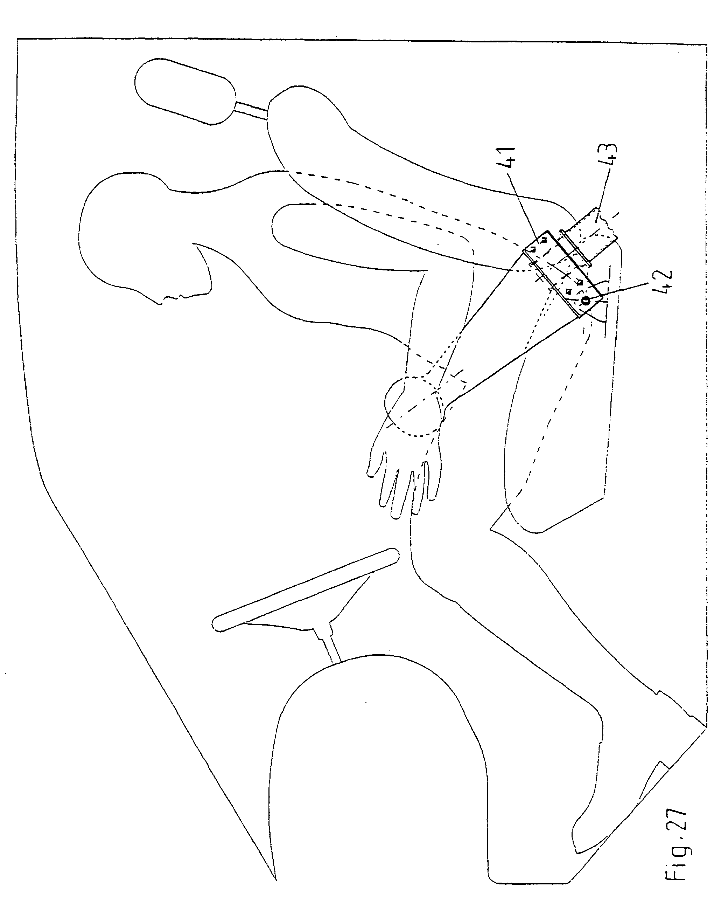

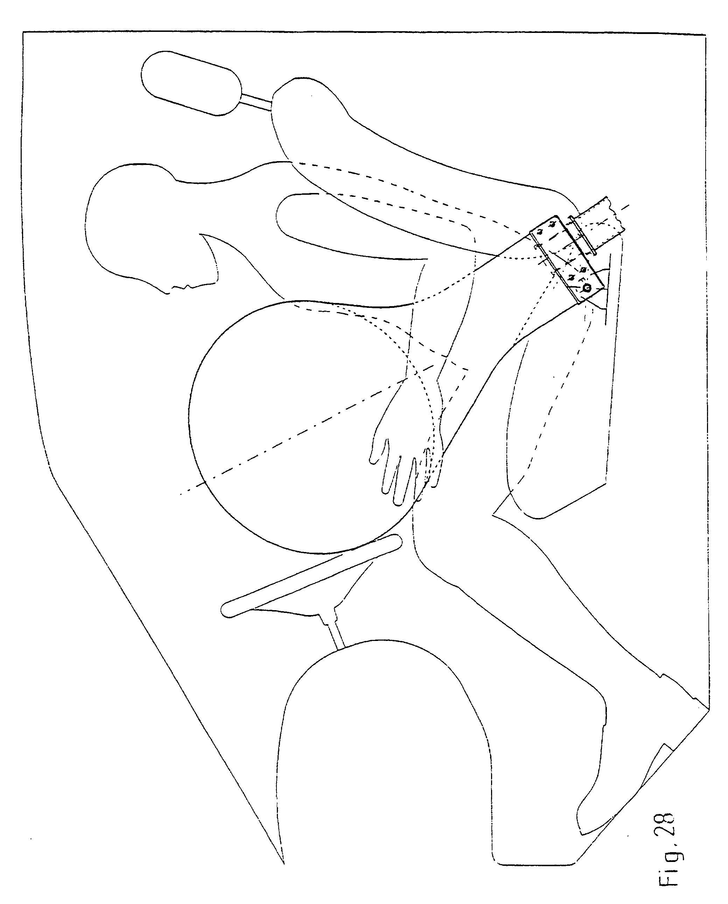

Die Fig. 27 zeigt detaillierter die Generatorseite des Airbagsystems 2 am Beispiel des Fahrersitzes. Der Gassack ist in einer Halterung 41 befestigt, die ihrerseits an einem Befestigungspunkt 42 mit dem Kraftfahrzeug verbunden ist. An der Halterung 41 ist eine Zuleitung 43 zu dem in dieser Figur nicht dargestellten Gasgenerator befestigt. Die Fig. 28 zeigt den aufgeblasenen Gassack aus der Sicht der Fig. 27.

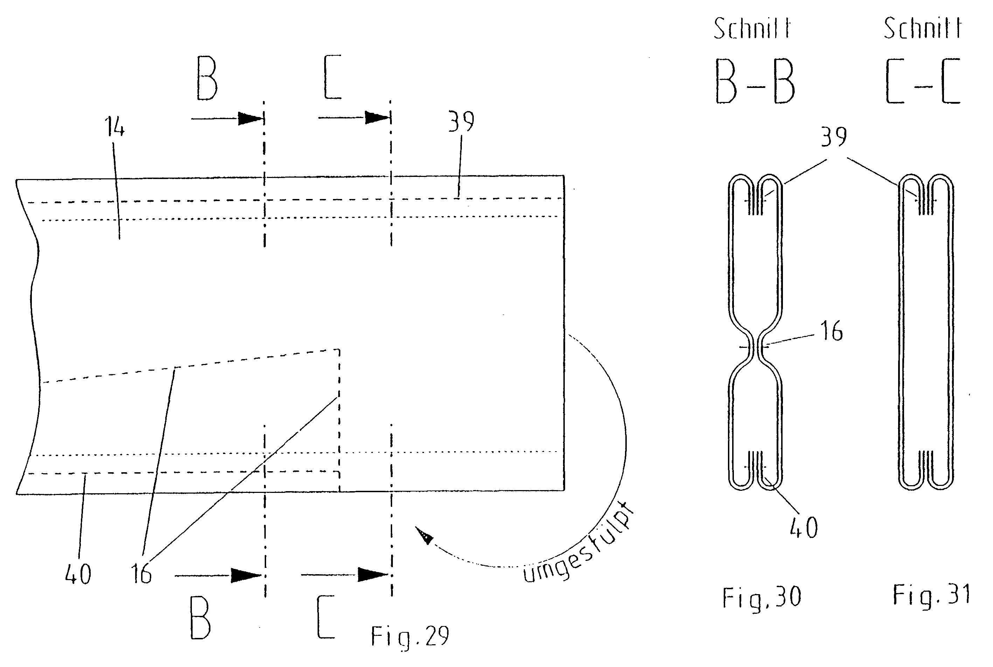

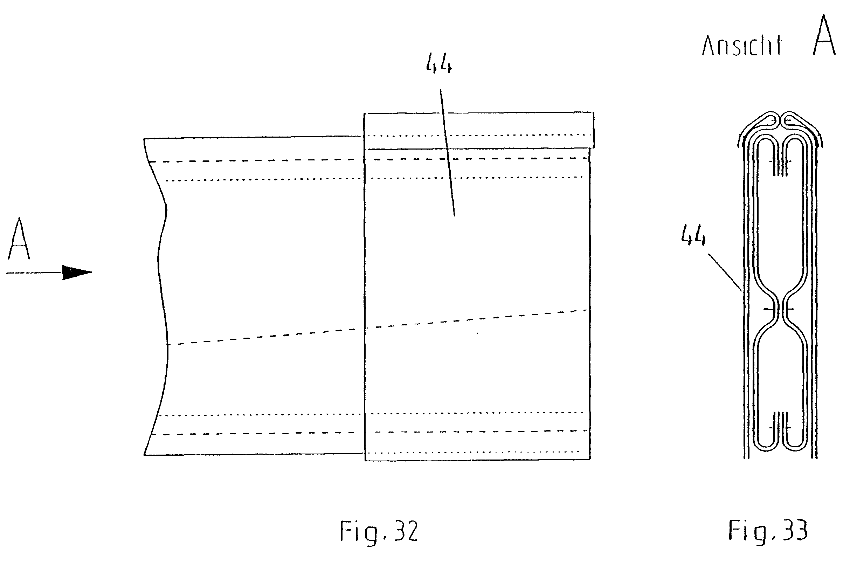

Die Figuren 29 bis 33 zeigen das generatorseitige Ende 14 des Gassacks 12, bei dem die übereinandergelegten Seiten ebenfalls durch die umlaufenden Nähte 39, 40 miteinander verbunden sind. Weiterhin ist der Abnäher 16 vorgesehen, der die Aufnahmeöffnung des Endes 14 auf die für die Zuleitung 43 erforderliche Größe reduziert. Der äußerste Abschnitt des Endes 14 wird für die Montage an der Halterung 41 nach außen umgestülpt, so daß das Ende 14 die in den Figuren 32 und 33 dargestellte Form mit einem umgestülpten Abschnitt 44 aufweist.

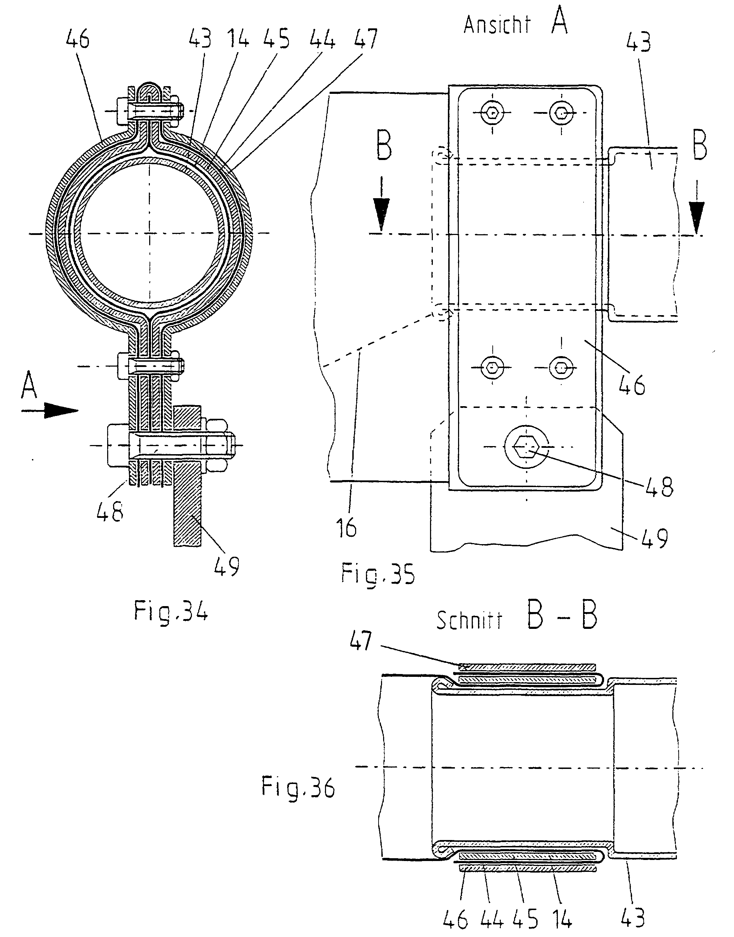

Die Figuren 34 bis 36 zeigen das in der Halterung 41 montierte Ende 14 des Gassacks. In den Gassack hinein ertreckt sich die Zuleitung 43. Die Halterung weist ein inneres Blechteil 45 als erstes Halteteil auf, das sich zwischen dem Ende 14 und dem umgestülpten Abschnitt 44 erstreckt und das Ende 14 und die Zuleitung 43 umgreift. Das Blechteil 45 ist oberhalb der Zuleitung 43 zusammengedrückt, so daß dort der obere Abschnitt des Endes 14 geklemmt ist. Die Enden sind unterhalb der Zuleitung zusammengedrückt und klemmen dort den unteren Abschnitt des Endes 14. Der umgestülpte Abschnitt 44 ist von zwei äußeren Blechteilen 46, 47 als zweite Halteteile umgeben. Diese werden oben und unten mit dem dazwischen liegenden inneren Blechteil 45 verschraubt und klemmen dabei auch den umgestülpten Abschnitt 44. In dem unten aneinander liegenden Blechteilen 45, 46, 47 ist ein Bolzen 48 vorgesehen, der den vorher allgemein genannten Befestigungspunkt 38 bildet. Mittels dieses Bolzens ist das Airbagsystem über einen Anbindung 49 mit dem Kraftfahrzeug, z.B. mit dem Sitz, dem Boden oder der Seitenverkleidung verbunden.

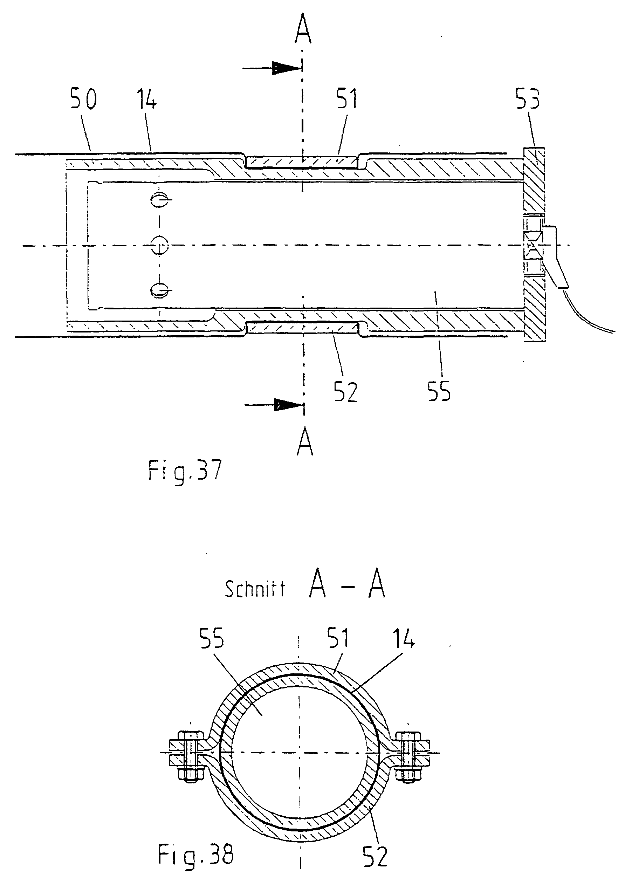

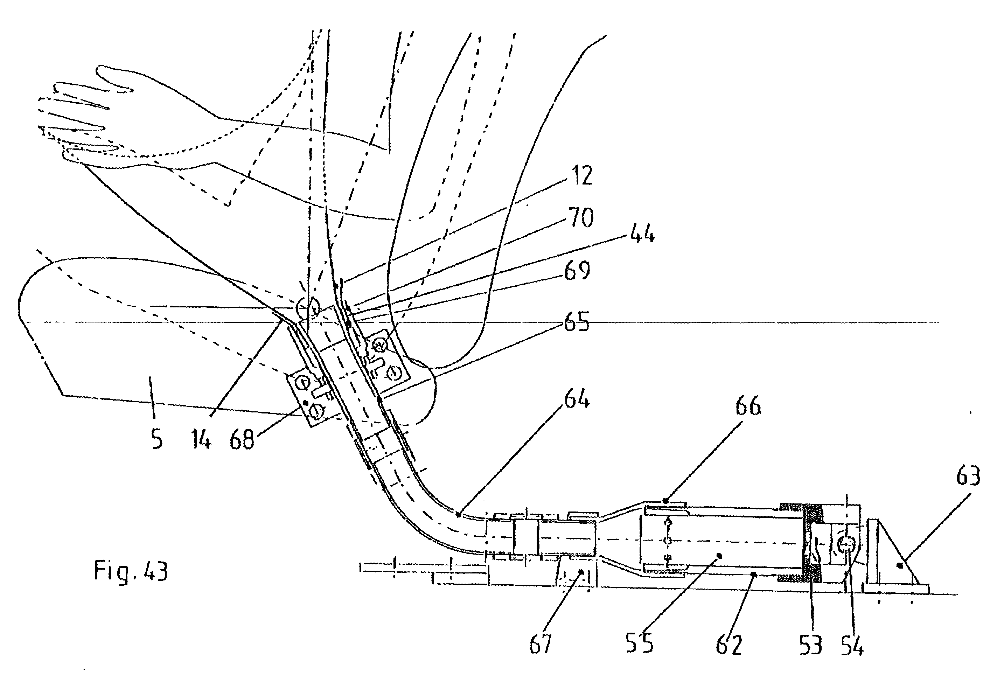

Eine zweite Ausführungsform der Befestigung des Gassackes am generatorseitigen Ende ist in den Figuren 37 und 38 dargestellt. Dort ist das Ende 14 des Gassacks über ein Diffusorrohr 50 gezogen worden und wird in dessen mittleren Abschnitt durch Schellen 51, 52 geklemmt. Das aus dem Gassack ragende Ende des Diffusorrohres ist analog zum Ausführungsbeispiel der Fig. 43 mit einem Befestigungsteil 53 zur Befestigung am Kfz verbunden. Innerhalb des Diffusorrohres ist ein Rohrgasgenerator 55 vorgesehen.

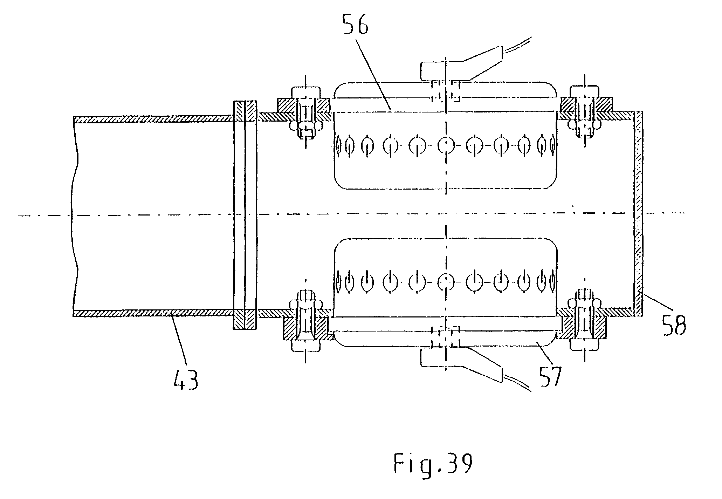

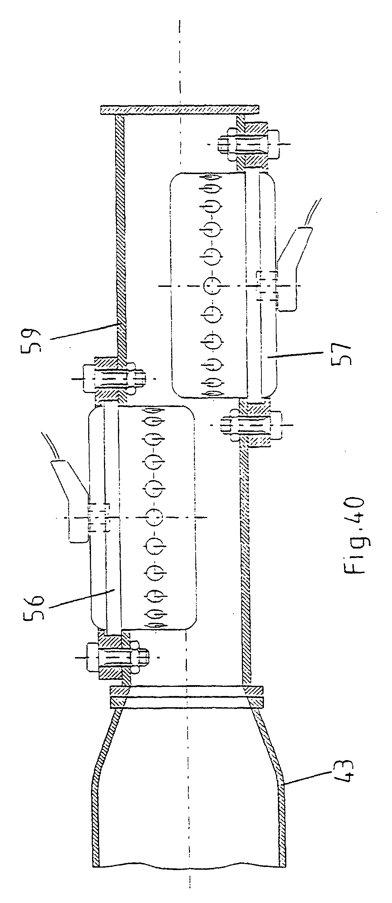

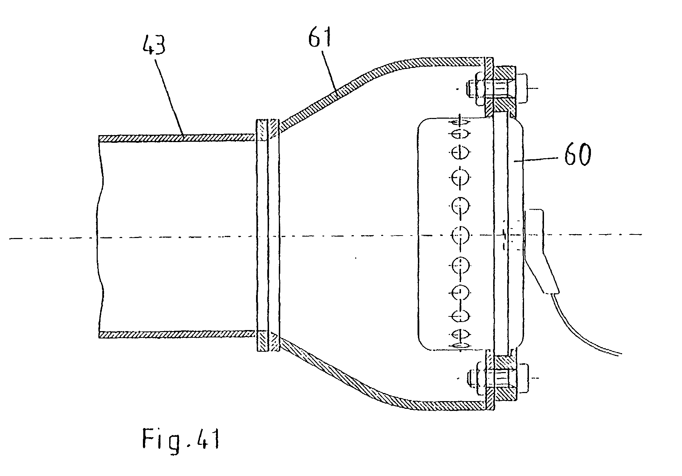

Die Figuren 39 bis 41 zeigen unterschiedliche Ausführungsformen mit mindestens einem topfförmigen Generator, wie er bei Fahrerairbags verwendet wird. So sind in der Ausführungsform der Fig. 39 zwei topfförmige Gasgeneratoren 56, 57 in einem Gehäuse 58 gegenüberliegend angeordnet. An das Gehäuse 58 ist die Zuleitung 43 angeflanscht. Bei der Ausführungsform der Fig. 40 sind zwei topfförmige Gasgeneratoren 56, 57 versetzt gegenüberliegend angeordnet, wodurch ein Gehäuse 59 für deren Aufnahme niedriger ausgeführt werden kann. Bei der Ausführungsform der Fig. 41 ist nur ein topfförmiger Gasgenerator 60 in einem Gehäuse 61 angeordnet.

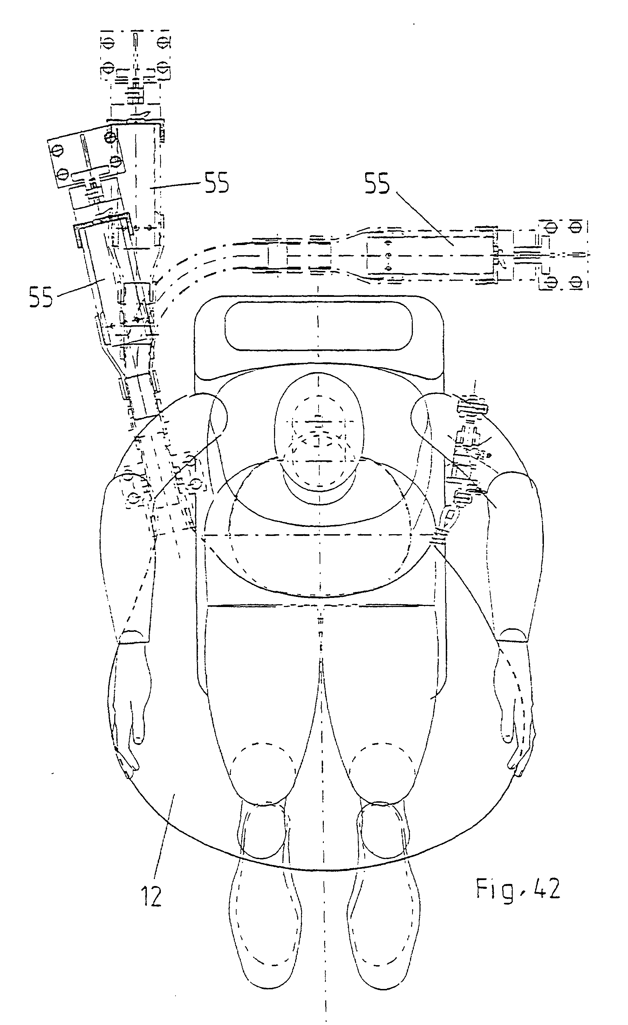

Aus der Draufsicht der Fig. 42 auf das Airbag-System mit Insassen sind einige mögliche Befestigungsorte der Generatorseite des Airbag-Systems im Kfz erkennbar. Es ist eine Ausführung mit einem Rohrgasgenerator 55 mit voll aufgeblasenem Gassack dargestellt. Der Rohrgasgenerator ist in drei verschiedenen Lagen dargestellt.

Aus der Seitenansicht der Fig. 43 ist nochmals detaillierter eine Ausführungsform mit seitlich hinter dem Sitz angeordnetem Gasgenerator dargestellt. Der Rohrgasgenerator 55 ist in einem Diffusorrohr 62 befestigt, das seinerseits über ein Befestigungsteil 53 und die Bohrung 54 mittels eines Bolzens an einem mit dem Kfz verbundenen Befestigungsteil 63 befestigt ist. Der Gasgenerator 55 ist über eine gekrümmte, flexible oder starre Zuleitung 64 und ein Zuleitungsendrohr 65 mit dem Gassack 12 verbunden, wobei ein Verbindungsteil 66, das mittels eines Befestigungsteils 67 ebenfalls mit dem Kraftfahrzeugboden verbunden ist, die Verbindung herstellt. Das Zuleitungsendrohr 65 ist mittels eines Befestigungsteils 68 am Sitz 5 oder seitlich an der Karosserie befestigt.

In dieser Ausführungsform ist eine von den Figuren 34 bis 36 abweichende Verbindungsart zwischen dem Gassack 12 und dem angrenzenden Bauteil - in diesem Fall dem Zuleitungsendrohr 65 - dargestellt. Das Ende 14 des Gassacks ist auch in diesem Fall nach außen umgestülpt. Zwischen dem Ende 14 und dem umgestülpten Abschnitt 44 ist ein Keilring 69 vorgesehen, der mittels eines Klemmteils 70, das über den umgestülpten Abschnitt 44 geschoben wird, arretierbar ist.

## Patentansprüche

1. Airbag-Rückhaltesystem, das im Bereich des Unterkörpers eines Insassen (1) angeordnet ist und einen im inaktivierten Zustand auf dem Körper des Insassen (1) liegenden Gassack (4, 12) umfaßt, der zwei Enden (13, 14) aufweist, mittels derer er an Bauteilen des Kraftfahrzeuges befestigbar ist,
**dadurch gekennzeichnet,**
**daß** der Gassack (4, 12) im inaktivierten Zustand unabhängig von einem Sicherheitsugrt lose auf dem Körper des Insassen (1) liegt und daß mindestens ein Ende (13) des Gassackes (4, 12) lösbar am Kraftfahrzeug befestigbar ist.

2. Airbag-Rückhaltesystem nach Anspruch 1, **dadurch gekennzeichnet, daß** ein im inaktivierten Zustand lose auf den Oberschenkeln (8) des Insassen liegender Gassack (4, 12) vorgesehen ist.

3. Airbag-Rückhaltesystem nach Anspruch 1 oder 2, **dadurch gekennzeichnet, daß** die Enden (13, 14) des Gassacks (4, 12) seitlich oder hinter dem Insassen über Halterungen am Kraftfahrzeug befestigbar sind.

4. Airbag-Rückhaltesystem nach mindestens einem der vorhergehenden Ansprüche, **dadurch gekennzeichnet, daß** die Enden (13, 14) des Gassacks angepaßt an die Halterungen schmaler ausgeführt sind als der übrige Bereich des Gassackes.

5. Airbag-Rückhaltesystem nach mindestens einem der vorhergehenden Ansprüche, **dadurch gekennzeichnet, daß** der Gassack im inaktivierten Zustand innerhalb einer Hülle (3) gefaltet ist.

6. Airbag-Rückhaltesystem nach mindestens einem der vorhergehenden Ansprüche, **dadurch gekennzeichnet, daß** ein Ende (14) des Gassacks mit einem Gasgenerator (55) verbunden ist, der an oder neben dem Fahrzeugsitz, an oder im Mitteltunnel, am Boden oder an der Seitenwand angeordnet ist.

7. Airbag-Rückhaltesystem nach mindestens einem der vorhergehenden Ansprüche, **dadurch gekennzeichnet, daß** die schmalen Enden (13, 14) des Gassacks bei ausgebreiteter Lage des Gassacks mit Abstand nebeneinander, zueinander geneigt oder hintereinander angeordnet sind.

8. Airbag-System nach mindestens einem der vorhergehenden Ansprüche, **dadurch gekennzeichnet, daß** der Gassack (4, 12) Fächer-, Kissen-, Linsen-, Kreis-, Trapez- oder Knochenform aufweist.

9. Airbag-System nach mindestens einem der vorhergehenden Ansprüche, **dadurch gekennzeichnet, daß** der Gassack mindestens eine, mit Durchbrüchen versehene Trennwand (23, 24) zur Bildung eines Mehrkammer-Gassacks aufweist, wobei die Grundfläche der Trennwände der Form des aufgeblasenen Gassacks entspricht.

10. Airbag-System nach mindestens einem der vorhergehenden Ansprüche, **dadurch gekennzeichnet, daß** der Gassack durch mindestens eine Naht in mehrere Kammern unterteilt ist, die untereinander in Verbindung stehen.

11. Airbag-System nach mindestens einem der vorhergehendenb Ansprüche, **dadurch gekennzeichnet, daß** mindestens ein Band (17, 18, 19) oder eine Kordel entlang des äußeren Randes des ausgebreiteten Gassacks in diesem lose verläuft, wobei ein Ende des Bandes innerhalb des Gassackes und dessen anderes Ende außerhalb des Gassackes befestigt ist.

12. Airbag-Rückhaltesystem nach mindestens einem der vorhergehenden Ansprüche, dadurch gekennzeichnet, daß mindestens ein sich in anderer Richtung als der Gassack entfaltender Zusatzgassack (35) vorgesehen ist.

13. Airbag-Rückhaltesystem nach mindestens einem der vorhergehenden Ansprüche, **dadurch gekennzeichnet, daß** das lösbare Ende (13) des Gassacks eine in ein Schloß (37) einklinkbare Verriegelungseinheit (36) aufweist, in deren Bereich das Ende (13) des Gassacks als flaches Band verläuft.

14. Airbag-Rückhaltesystem nach mindestens einem der vorhergehenden Ansprüche, **dadurch gekennzeichnet, daß** das gasgeneratorseitige Ende (14) des Gassacks an einem Diffusorrohr (50) befestigt ist, an oder in dem der Gasgenerator (55) vorgesehen ist.

15. Airbag-Rückhaltesystem nach mindestens einem der vorhergehenden Ansprüche, **dadurch gekennzeichnet, daß** der gasgeneratorseitige Bereich des Gassacks auf einem Zuleitungsendrohr (43, 65) oder Diffusorrohr sitzt und dort von einem ersten Halteteil (45) umfaßt ist, daß das Ende (14) des Gassacks über das Halteteil (45) gestülpt ist und von mindestens einem zweiten Halteteil (46) umfaßt ist, wobei die ersten und zweiten Halteteile (45, 46) neben dem Zuleitungsendrohr(43, 65) oder dem Diffusorrohr aneinander liegen und dort miteinander verbunden sind und mit dem Kfz verbindbar sind.

16. Airbag-Rückhaltesystem nach mindestens einem der vorhergehenden Ansprüche, **dadurch gekennzeichnet, daß** der gasgeneratorseitige Bereich des Gassacks auf einem Zuleitungsendrohr (65) oder Diffusorrohr sitzt und von einem Keilring (69) umgeben ist, daß das Ende (14) des Gassacks über den Keilring (69) gestülpt ist und von einem mit einem Innenkonus versehenen Klemmteil (70) umgeben ist.

17. Airbag-Rückhaltesystem nach mindestens einem der vorhergehenden Ansprüche, **dadurch gekennzeichnet, daß** der Gasgenerator (55) in einem Diffusorrohr (62) am Kfz befestigt ist und über eine gekrümmte, flexible oder starre Zuleitung (64) mit einem schräg nach oben vorn verlaufenden Zuleitungsendrohr (65) verbunden ist, an dem das gasgeneratorseitige Ende (14) des Gassacks befestigt ist.

## Claims

1. Airbag retaining system which is mounted in the area of the lower part of the body of the passenger (1) and comprises a gas bag (4, 12) which lies when in the inactivated state on the body of the passenger (1) and which has two ends (13, 14) by means of which it can be fixed on component parts of the motor vehicle
**characterised in that**
when in the inactivated state the gas bag (4, 12) lies loosely on the body of the passenger (1) independently of a seat belt and that at least one end (13) of the gas bag (4, 12) can be detachably fixed on the motor vehicle.

2. Airbag retaining system according to claim 1 **characterised in that** a gas bag (4,12) is provided which in the inactivated state lies loosely on the upper thighs (8) of the passenger.

3. Airbag retaining system according to claim 1 or 2 **characterised in that** the ends (13, 14) of the gas bag (4, 12) can be fixed at the side or behind the passenger through holders on the motor vehicle.

4. Airbag retaining system according to at least one of the preceding claims **characterised in that** the ends (13, 14) of the gas bag are designed narrower than the remaining area of the gas bag to fit on the holders.

5. Airbag retaining system according to at least one of the preceding claims **characterised in that** the gas bag is folded in the inactivated state inside a cover (3).

6. Airbag retaining system according to at least one of the preceding claims **characterised in that** an end (14) of the gas bag is connected to a gas generator (55) which is mounted on or next to the vehicle seat, on or in the central tunnel, on the floor or on the side wall.

7. Airbag retaining system according to at least one of the preceding claims **characterised in that** the narrow ends (13, 14) of the gas bag when the gas bag is spread out are arranged at a distance side by side, inclined relative to each other or one behind the other.

8. Airbag system according to at least one of the preceding claims **characterised in that** the gas bag (4, 12) has a fan, cushion, lens, circular, trapezoidal or bone shape.

9. Airbag system according to at least one of the preceding claims **characterised in that** the gas bag has at least one partition (23, 24) provided with apertures to form a multi-chamber gas bag wherein the base surface of the partition walls corresponds to the shape of the inflated gas bag.

10. Airbag system according to at least one of the. preceding claims, **characterised in that** the gas bag is divided by at least one seam into several chambers which communicate with each other.

11. Airbag system according to at least one of the preceding claims **characterised in that** at least one band (17, 18, 19) or cord runs loosely in and along the outer edge of the spread-out gas bag wherein one end of the band is fixed inside the gas bag and its other end is fixed outside of the gas bag.

12. Airbag retaining system according to at least one of the preceding claims **characterised in that** at least one additional gas bag (35) is provided which unfolds in a different direction from the main gas bag.

13. Airbag retaining system according to at least one of the preceding claims **characterised in that** the detachable end (13) of the gas bag has a locking unit (36) which can engage in a lock (37) and in whose area the end (13) of the gas bag runs as a flat band.

14. Airbag retaining system according to at least one of the preceding claims **characterised in that** the end (14) of the gas bag on the gas generator side is fixed on a diffuser pipe (50), on or in which the gas generator (55) is provided.

15. Airbag retaining system according to at least one of the preceding claims, **characterised in that** the area of the gas bag on the gas generator side fits on a supply line end pipe (43, 65) or diffuser pipe and is enclosed there by a first holder part (45), that the end (14) of the gas bag is inverted over the holder part (45) and is enclosed by at least one second holder part (46) wherein the first and second holder parts (45, 46) adjoin one another next to the supply line end pipe (43, 65) or the diffuser pipe and are connected together there and can be connected to the vehicle.

16. Airbag retaining system according to at least one of the preceding claims, **characterised in that** the area of the gas bag on the gas generator side sits on a supply line end pipe (65) or diffuser pipe and is enclosed by a wedge ring (69), that the end (14) of the gas bag is inverted over the wedge ring (69) and is enclosed by a clamping part (70) which is provided with an inner cone.

17. Airbag retaining system according to at least one of the preceding claims **characterised in that** the gas generator (55) is fixed in a diffuser pipe (62) on the vehicle and is connected by a curved, flexible or rigid supply line (64) to a supply line end pipe (65) which runs inclined upwards and forwards and on which the end (14) of the gas bag on the gas generator side is fixed.

## Revendications

1. Système de retenue à coussin d'air dit airbag, agencé dans la région inférieure du tronc d'un passager (1) et comprenant un sac à gaz (4,12) reposant dans l'état non activé sur le corps du passager (1), ledit sac présentant deux extrémités (13, 14) au moyen desquelles il est susceptible d'être fixé sur des composants du véhicule automobile, **caractérisé en ce que** le sac à gaz (4, 12) repose dans l'état non activé de façon lâche sur le corps du passager (1) et indépendamment d'une ceinture de sécurité, et en ce qu'une extrémité (13) au moins du sac à gaz (4, 12) est susceptible d'être fixée de façon détachable sur le véhicule automobile.

2. Système de retenue à airbag selon la revendication 1, **caractérisé en ce qu'**il est prévu un sac à gaz (4, 12) qui repose dans l'état non activé sur les cuisses (8) du passager.

3. Système de retenue à airbag selon l'une ou l'autre des revendications 1 et 2, **caractérisé en ce que** les extrémités (13, 14) du sac à gaz (4, 12) sont susceptibles d'être fixées sur le côté ou derrière le passager au moyen de montures sur le véhicule automobile.

4. Système de retenue à airbag selon l'une au moins des revendications précédentes, **caractérisé en ce que** les extrémités (13, 14) du sac à gaz sont réalisées de façon ajustée aux montures, sous forme plus étroite que la région restante du sac à gaz.

5. Système de retenue à airbag selon l'une au moins des revendications précédentes, **caractérisé en ce que** le sac à gaz dans l'état non activé est replié à l'intérieur d'une enveloppe (3).

6. Système de retenue à airbag selon l'une au moins des revendications précédentes, **caractérisé en ce qu'**une extrémité (14) du sac à gaz est reliée à un générateur de gaz (55), lequel est agencé sur le siège ou à côté de celui-ci, sur le tunnel central ou dans celui-ci, sur le sol, ou sur la paroi latérale.

7. Système de retenue à airbag selon l'une au moins des revendications précédentes, **caractérisé en ce que** les extrémités étroites (13, 14) du sac à gaz sont agencées, lorsque le sac à gaz est dans la condition déployée, à distance l'une à côté de l'autre, de façon inclinée l'une vers l'autre, ou l'une derrière l'autre.

8. Système de retenue à airbag selon l'une au moins des revendications précédentes, **caractérisé en ce que** le sac à gaz (4,12) présente une forme en éventail, en coussin d'air, en lentille, une forme circulaire, une forme trapézoïdale, ou une forme en haltère.

9. Système de retenue à airbag selon l'une au moins des revendications précédentes, **caractérisé en ce que** le sac à gaz comprend au moins une cloison de séparation (23, 24) dotée de traversées, afin de former un sac à gaz à plusieurs chambres, et en ce que la surface de base des cloisons correspond à la forme du sac à gaz gonflé.

10. Système de retenue à airbag selon l'une au moins des revendications précédentes, **caractérisé en ce que** le sac à gaz est subdivisé par au moins une couture en plusieurs chambres qui communiquent les unes avec les autres.

11. Système de retenue à airbag selon l'une au moins des revendications précédentes, **caractérisé en ce qu'**au moins une bande (17, 18, 19) ou une cordelette s'étend le long de la bordure extérieure du sac à gaz déployé et de façon lâche dans celui-ci, et en ce qu'une extrémité de la bande est fixée à l'intérieur du sac à gaz, et son autre extrémité est fixée à l'extérieur du sac à gaz.

12. Système de retenue à airbag selon l'une au moins des revendications précédentes, **caractérisé en ce qu'**il est prévu au moins un sac à gaz additionnel (35) qui se déploie dans une autre direction que le sac à gaz.

13. Système de retenue à airbag selon l'une au moins des revendications précédentes, **caractérisé en ce que** l'extrémité détachable (13) du sac à gaz comprend une unité de verrouillage (36) susceptible d'être enclenchée dans une serrure (37), et en ce que l'extrémité (13) du sac à gaz se termine sous la forme d'une bande aplatie dans la région de cette unité de verrouillage.

14. Système de retenue à airbag selon l'une au moins des revendications précédentes, **caractérisé en ce que** l'extrémité (14) du sac à gaz du côté du générateur de gaz est fixée sur un tube diffuseur (50), le générateur de gaz (55) étant prévu sur ou dans ledit tube diffuseur.

15. Système de retenue à airbag selon l'une au moins des revendications précédentes, **caractérisé en ce que** la région du sac à gaz du côté du générateur de gaz repose sur un tube terminal d'admission (43, 65) ou sur un tube diffuseur, et est entourée à cet emplacement par une première pièce de maintien (45), en ce que l'extrémité (14) du sac à gaz est rabattue par-dessus la pièce de maintien (45) et est entourée par au moins une deuxième pièce de maintien (46), et en ce que la première et la deuxième pièce de maintien (45, 46) sont disposées l'une contre l'autre à côté du tube terminal d'admission (43, 65) ou du tube diffuseur, et reliées l'une à l'autre à cet endroit, et susceptibles d'être reliées au véhicule.

16. Système de retenue à airbag selon l'une au moins des revendications précédentes, **caractérisé en ce que** la région du sac à gaz du côté du générateur de gaz repose sur un tube terminal d'admission (65) ou sur un tube diffuseur, en ce qu'elle est entourée par une bague en coin (68), en ce que l'extrémité (14) du sac à gaz est rabattue par-dessus la bague en coin (69), et en ce qu'elle est entourée par une pièce de serrage (70) pourvue d'un cône intérieur.

17. Système de retenue à airbag selon l'une au moins des revendications précédentes, **caractérisé en ce que** le générateur de gaz (55) est fixé sur le véhicule dans un tube diffuseur (62), et en ce qu'il est relié au moyen d'une conduite d'amenée (64) incurvée, souple ou rigide, à un tube terminal d'admission (65), qui s'étend en oblique vers le haut et vers l'avant, et sur lequel est fixée l'extrémité (14) du sac à gaz du côté du générateur de gaz.
